# FASCICULE DE BREVET EUROPEEN

(11) **EP 2 598 372 B1**
(45) Date de publication et mention de la délivrance du brevet: **11.06.2014**
(21) Numéro de dépôt: 11743638.6
(22) Date de dépôt: 25.07.2011
(51) Int. Cl.: B60P 1/00, B60P 3/08, B60R 3/00

(54) **EXTENSION LATERALE RABATTABLE ATTENANTE A AU MOINS UN PLAN DE CHARGEMENT D'UN VEHICULE PORTE-CHARGES**
AN MINDESTENS EINE LADEFLÄCHE EINES LASTFAHRZEUGES ANGRENZENDE FALTBARE SEITLICHE VERLÄNGERUNG
FOLDING LATERAL EXTENSION ADJOINING AT LEAST ONE LOADING SURFACE OF A CARGO-CARRYING VEHICLE

(30) Priorité: 26.07.2010 FR 1003127
(43) Date de publication de la demande: 05.06.2013
(73) Titulaire: Lohr Industrie, 67980 Hangenbieten (FR)
(72) Inventeur: KLOTZ, Martin, F-67190 Gresswiller (FR)
(74) Mandataire: Merckling, Norbert
(86) Numéro de dépôt international: PCT/IB2011/053305
(87) Numéro de publication internationale: WO 2012/014144

(56) Documents cités:
- WO-A1-2008/117065
- CA-A1- 2 410 135
- GB-A- 2 465 255

## Description

La présente invention concerne une structure déployable du type extension latérale rabattable destinée à être montée sur le côté d'au moins un plateau d'un véhicule porte-charges afin de servir de support porteur ou à permettre à un opérateur de marcher confortablement et sans danger le long de ce plateau de chargement à l'état chargé, lorsque le véhicule est à l'arrêt comme divulgué par le document WO 2008/117065.

L'invention concerne le domaine technique du transport par véhicules de toute nature, plus particulièrement, mais non exclusivement celui des véhicules porte-voitures, qu'il s'agisse de camions, de remorques, de semi-remorques ou de wagons ou plateformes ferroviaires.

Afin de transporter simultanément un maximum de véhicules, les véhicules porte-voitures actuels comportent classiquement plusieurs plateaux de chargement de hauteur variable et réglable sur lesquels des voitures ou autres véhicules motorisés et plus généralement des charges routières sont successivement chargées, transportées, puis déchargées.

Lorsque le véhicule porteur est à l'arrêt, il est parfois nécessaire que l'opérateur monte sur les plateaux de chargement et se déplace le long de ceux-ci pour réaliser certaines opérations techniques ou de maintenance ou même pour de simples contrôles de sécurité, par exemple pour arrimer ou détacher les véhicules transportés, pour accéder à un véhicule à décharger ou tout simplement pour descendre du plateau de chargement après avoir chargé un véhicule à transporter.

Si l'opérateur peut facilement se déplacer sur les plateaux de chargement lorsqu'ils sont vides, la situation est très différente une fois ceux-ci chargés de véhicules à transporter.

En effet, afin de d'optimiser le transport, l'espace de chargement est généralement rempli au maximum par des véhicules à transporter, disposés pour ne laisser que peu de place disponible surtout latéralement pour le passage d'un opérateur. Les véhicules les plus larges peuvent atteindre, et même parfois légèrement dépasser le bord latéral du plateau sur lequel ils sont chargés.

L'opérateur est de ce fait contraint de marcher très près du bord latéral du plateau de chargement, ce qui est peu pratique et s'avère assez dangereux pour sa sécurité lorsqu'il s'agit du plateau supérieur du véhicule porte-voitures même si des protections pour éviter les chutes sont en place.

Il n'est cependant pas possible de réaliser des plateaux de chargement plus larges qui comporteraient une zone supplémentaire laissée libre pour permettre le passage de l'opérateur. En effet, pendant le roulage, le véhicule porte-voitures est tenu de respecter les différents gabarits routiers ou ferroviaires le concernant.

Le but de l'invention est de permettre à l'opérateur de se déplacer confortablement et en toute sécurité le long d'un plateau de chargement, notamment le plateau supérieur, d'un véhicule porte-voitures à l'arrêt, sans diminution de la surface disponible pour le chargement, ni augmentation notable de la largeur du véhicule porte-voitures pendant son roulage, tout en garantissant le respect du gabarit routier ou ferroviaire.

Pour résoudre ce problème technique, l'invention se rapporte à une extension latérale de passage piéton, mais aussi de façon générale de support, cette extension étant destinée à être placée le long d'au moins un plateau de chargement d'un véhicule porte-charges et à s'étendre parallèlement et dans le prolongement de ce plateau de chargement.

Selon l'invention, l'extension présente deux positions caractéristiques : une position déployée dans laquelle elle constitue un plan support permettant le soutien en toute sécurité d'une charge ou d'une partie de celle-ci et d'au moins un piéton statique ou en mouvement, et une position rabattue de moindre largeur, position dans laquelle elle se trouve escamotée. Le passage de l'une à l'autre de ces positions caractéristiques se fait par un mouvement de pivotement d'ensemble dans un plan parallèle au plan support de l'extension latérale.

La structure déployable selon l'invention comporte une multitude de supports ou d'éléments préférentiellement rectilignes, juxtaposés parallèlement les uns aux autres, qui comprennent chacun une portion centrale, une extrémité intérieure destinée à être reliée au véhicule et une extrémité extérieure située du côté opposé, destinée à être disposée vers l'extérieur. En position déployée de l'extension latérale, ces éléments s'étendent sensiblement transversalement par rapport à la direction générale de l'extension latérale et se trouvent suffisamment rapprochés pour former le plan support porteur constituant l'extension latérale.

L'extension latérale comprend également un élément longitudinal rigide de liaison, qui lui sert de bordure longitudinale extérieure et qui relie les éléments préférentiellement rectilignes entre eux.

Les supports ou éléments préférentiellement rectilignes sont montés à libre pivotement par chacune de leurs extrémités, d'une part pour leurs extrémités intérieures, sur une structure longitudinale fixe par rapport au plateau de chargement, et d'autre part pour leurs extrémités extérieures sur l'élément longitudinal rigide de liaison.

En position d'extension de la structure déployable, les éléments préférentiellement rectilignes portent par une partie de leur longueur sur une surface plane d'appui adjacente et fixe par rapport au plateau de chargement et se trouvent en porte-à-faux en saillie vers l'extérieur sur le restant de leur longueur tout en présentant une résistance mécanique suffisante pour soutenir en toute sécurité une charge ou un piéton statique ou en mouvement.

L'invention se rapporte également à un véhicule porte-charges comportant au moins un plateau de chargement, qui est équipé le long d'au moins un de ses bords longitudinaux d'une telle extension latérale porteuse.

Selon les applications envisagées, on peut prévoir d'installer une telle structure latérale uniquement sur l'un des côtés ou sur les deux côtés du plateau de chargement du véhicule porte-charges.

De la même façon, lorsque le véhicule comporte plusieurs plateaux de chargement, l'un à la suite de l'autre ou l'un au-dessus de l'autre, on peut équiper chacun de ces plateaux d'une ou de deux extensions latérales, ou seulement certains de ces plateaux. En outre, bien que la structure déployable selon l'invention soit préférentiellement destinée à être montée sur le côté d'un plateau de chargement supérieur, une utilisation pour un plateau inférieur de chargement reste parfaitement envisageable.

Sur l'élément longitudinal de bordure de la passerelle peut être montée une structure de garde-corps pour garantir la sécurité de l'opérateur. En raison de la cinématique de rabattement de la passerelle vers sa position escamotée, le garde-corps reste en place de façon à pouvoir jouer son rôle de protection même dans le cas d'une passerelle non déployée. Il existe donc toujours une protection de bordure.

D'autres caractéristiques et avantages de l'invention apparaîtront à la lecture de la description détaillée qui va suivre, description faite à partir d'un mode de réalisation simple à considérer comme un exemple non limitatif et en référence aux dessins annexés, dans lesquels :
la figure 1 est une vue schématique de profil en perspective d'un camion porte-voitures équipé au niveau de son plateau de chargement supérieur d'une extension latérale selon l'invention en position déployée ;
la figure 2 est une vue schématique de profil en perspective d'un camion porte-voitures équipé au niveau de son plateau de chargement supérieur d'une extension latérale selon l'invention en position rabattue ;
. la figure 3 est une vue en perspective d'un exemple d'extension latérale selon l'invention en position déployée ;
. les figures 4 et 5 sont des vues de face de cette extension latérale respectivement en position déployée et en position rabattue ;
. la figure 6 est une vue de côté de l'extension latérale ;
. les figures 7 et 8 sont des vues de dessus de l'extension latérale respectivement à l'état déployé et à l'état rabattu, les éléments préférentiellement rectilignes n'étant pas tous représentés sur la figure 8 ;
. la figure 9 est une vue en perspective d'un exemple d'élément rectiligne sous la forme d'une tige représentée seule ;
. les figures 10 et 11 sont des vues en perspective d'un élément longitudinal rigide de liaison de l'extension latérale représenté seul, respectivement dans une variante de base et dans une variante préférentielle avec garde-corps ;
. la figure 12 est une vue en perspective d'un rail de fixation servant à fixer les tiges au longeron latéral du plateau de chargement ;
. la figure 13 est une vue en coupe transversale du rail de fixation de la figure 12.

L'invention procède de l'idée générale inventive qui consiste à former, le long d'un plateau de chargement d'un véhicule, une structure déployable latéralement servant de support et de passage piéton, rabattable horizontalement c'est-à-dire parallèlement au sol en utilisant une multitude d'éléments de support préférentiellement rectilignes faiblement espacés et montés à libre pivotement par chacune de leurs extrémités autour d'un axe vertical, d'une part pour l'extrémité intérieure disposée vers le véhicule, sur un longeron fixe par rapport au plateau de chargement ou sur le longeron de ce plateau et d'autre part pour l'extrémité opposée disposée vers l'extérieur, sur un tube longitudinal rigide de liaison. Les éléments préférentiellement rectilignes portent par une partie de leur longueur à partir de leurs extrémités intérieures sur une surface plane d'appui adjacente et fixe par rapport au plateau de chargement, pour se trouver en porte-à-faux vers l'extérieur sur le restant de leur longueur tout en présentant une résistance mécanique suffisante pour soutenir en toute sécurité, une charge ou la partie d'une charge ou au moins une personne statique ou en mouvement.

Cette structure multiarticulée formée d'une multitude d'éléments préférentiellement rectilignes juxtaposés permet la répartition des efforts s'exerçant sur elle.

Pour assurer une bonne compacité, les éléments préférentiellement rectilignes se trouvent juxtaposés, voire jointifs, en position rabattue.

Pour respecter la réglementation, l'extension latérale selon l'invention s'inscrit dans le gabarit routier ou ferroviaire autorisé pour le véhicule de transport à vide.

De plus, les mouvements d'extension et de rabattement peuvent être motorisés et télécommandés en fonctionnement semi-manuel ou automatique.

Afin de faciliter l'accès par un opérateur, une échelle, un escalier, un marchepied ou tout autre moyen d'accès facile à partir du sol peuvent être intégrés à la structure.

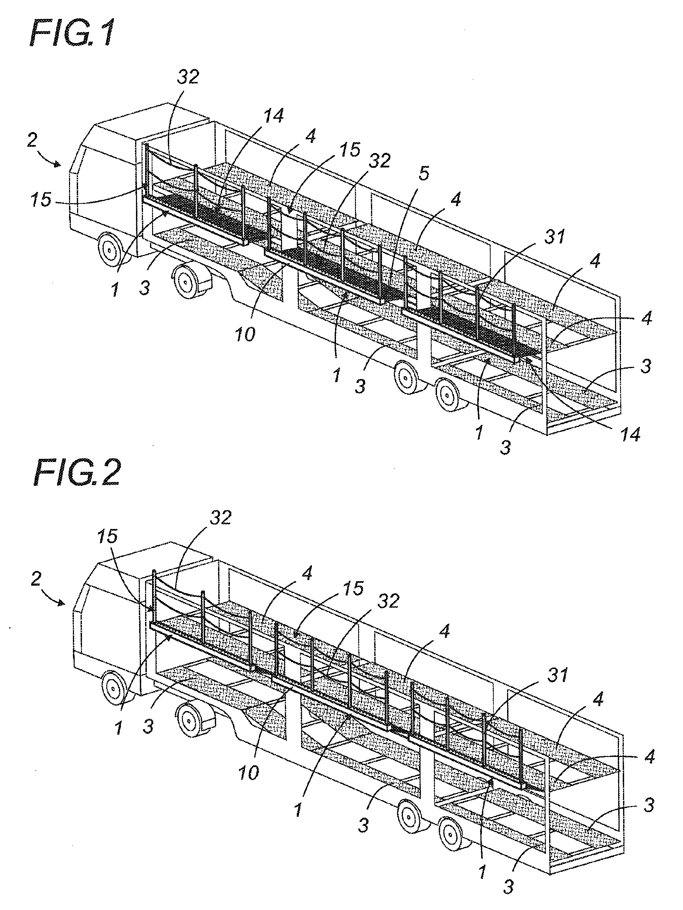

Sans pour autant devenir limitatif, on décrira ci-après en détail un mode de réalisation particulier d'une telle extension latérale rabattable, représentée à titre d'exemple sur les figures 1 à 13 des dessins. Les éléments équivalents représentés sur les différentes figures porteront les mêmes références numériques.

On définira dans la suite de cette description les notions de haut et de bas, d'inférieur et de supérieur, d'avant et d'arrière, de latéral, de transversal et de longitudinal, etc. par rapport au véhicule sur lequel l'extension latérale est destinée à être montée et en fonction du sens normal de circulation de ce véhicule.

Sur les figures 1 et 2, on a représenté l'exemple d'application particulier d'une extension latérale 1 à un camion porte-voitures 2 qui comporte plusieurs plateaux de chargement inférieurs 3 successifs et plusieurs plateaux de chargement supérieurs 4 successifs.

Dans cette application, l'extension latérale 1 est montée le long de chaque plateau de chargement supérieur 4 du camion porte-voitures 2 et s'étend sur le côté du véhicule. Bien entendu, on pourrait également envisager une extension latérale sous la forme d'une structure continue tout le long des plateaux supérieurs 4 ou une extension latérale limitée à certains ou à un seul des plateaux de chargement supérieurs 4. De même, une ou plusieurs extensions latérales de ce type pourraient équiper l'autre côté du véhicule ou un ou plusieurs plateaux de chargement inférieurs 3.

La structure déployable ou extension latérale 1 présente deux positions : une position déployée, représentée sur la figure 1, dans laquelle elle peut se trouver notamment à l'arrêt du véhicule et dans laquelle elle s'étend à côté du plateau de chargement 4 concerné et permet à l'opérateur de passer à pied le long du plateau, et une position rabattue, représentée sur la figure 2, escamotée contre le plateau de chargement 4. Cette dernière position est gardée pendant le roulage du véhicule.

L'extension latérale 1 peut de façon générale, servir de support à une charge ou une partie de celle-ci en plus de chemin de passage d'un opérateur.

Elle est constituée d'une multitude d'éléments individuels de support préférentiellement rectilignes 5, par exemple métalliques, par exemple des tiges, des lames ou des barrettes, voire des biellettes ou toute autre conformation, fils, câbles, baguettes ou autres qui comportent chacune une portion centrale 6 prolongée par une extrémité intérieure 7 reliée au véhicule et une extrémité extérieure 8 située du côté opposé et orientée vers l'extérieur.

Sur l'exemple représenté, la portion centrale 6 des éléments préférentiellement rectilignes 5 est sensiblement droite alors que leur extrémité intérieure 7 est recourbée vers le bas et leur extrémité extérieure 8 est recourbée vers le haut. Les extrémités intérieures 7 et extérieures 8 des tiges métalliques 5 présentent préférentiellement un filetage 9 sur leur portion d'extrémité. Cette conformation n'est donnée ici qu'à titre d'exemple non limitatif.

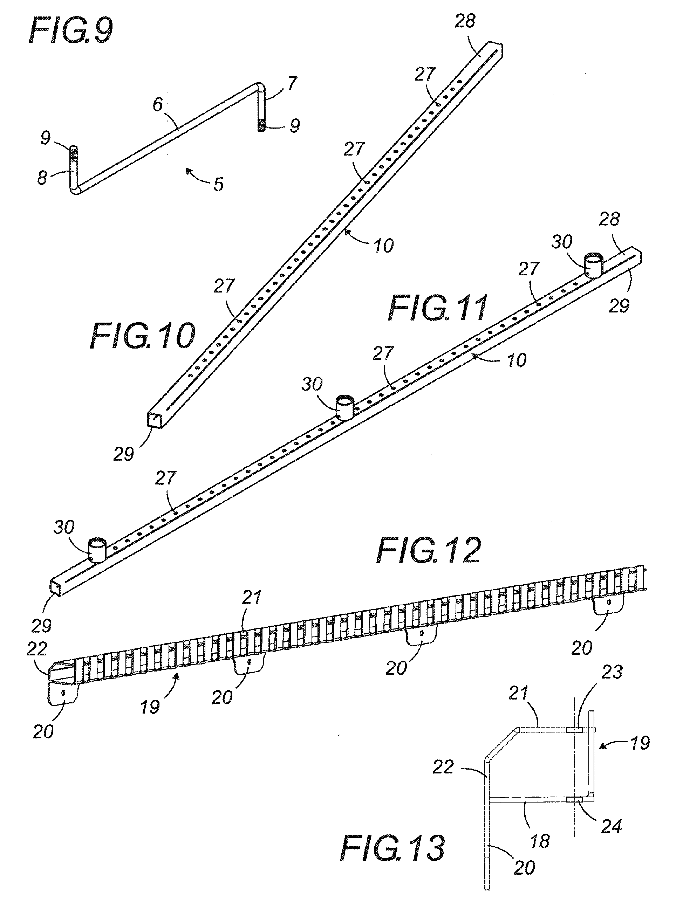

La structure déployable 1 selon l'invention comprend également un élément longitudinal rigide de liaison 10 qui lui sert de bordure longitudinale extérieure et sur lequel sont montées à pivotement les tiges préférentiellement rectilignes 5. Sur le mode de réalisation représenté, il s'agit par exemple, d'un profilé creux à section transversale fermée, et notamment d'un tube creux (représenté seul sur les figures 10 et 11). Cet élément longitudinal rigide confère, de par sa rigidité propre, la résistance et la stabilité à l'extension latérale 1 et permet de jumeler les tiges entre elles pour les contraindre à un mouvement de basculement d'ensemble.

Les tiges 5 sont montées à pivotement par chacune de leurs extrémités autour d'un axe vertical, d'une part par leurs extrémités intérieures 7 sur un longeron annexe 11 monté fixe sur le plateau de chargement 4 et d'autre part par leurs extrémités extérieures 8 sur l'élément longitudinal rigide de liaison 10.

Le longeron annexe 11 peut être une structure longitudinale du plateau de chargement du véhicule. Il s'agit par exemple de son longeron de bordure 12 attenant à l'extension latérale 1 ou d'un profilé séparé fixé sur ou solidarisé à celui-ci.

Les extrémités intérieures 7 des tiges 5 sont montées sur le le profilé de bordure du plateau de chargement ou sur le longeron annexe 11 mais du côté intérieur au véhicule.

Ainsi, en position déployée, les tiges préférentiellement rectilignes 5 viennent porter par la première partie de leur portion centrale 6 sur une surface plane d'appui 13 adjacente et fixe par rapport au plateau de chargement 4. Elles se trouvent en porte-à-faux vers l'extérieur sur le restant de leur longueur.

La surface plane d'appui 13 sur laquelle viennent reposer les tiges préférentiellement rectilignes 5 par une partie de leur longueur peut être indépendante ou faire partie du longeron annexe fixe 11 sur lequel sont montées les tiges 5 par leurs extrémités intérieures 7. Il s'agit de préférence de la face supérieure plane de cette structure longitudinale fixe 11 ou celle adjacente du profilé de bordure 12 du plan de chargement.

En position déployée, les tiges préférentiellement rectilignes 5 sont sensiblement parallèles les unes aux autres par exemple à une distance voisine ou égale à leur épaisseur. Elles portent sur la surface plane d'appui 13 fixe par rapport au plateau de chargement 4 et s'étendent transversalement à ce plateau de chargement 4 à partir de cette surface de portée, en porte-à-faux vers l'extérieur du véhicule.

Les tiges préférentiellement rectilignes 5 s'étendent jusqu'à l'élément longitudinal rigide de liaison 10 qui est et reste sensiblement parallèle au plateau de chargement 4 et qui se trouve à distance du plateau de chargement 4, et ceci déportées latéralement par rapport à celui-ci, lorsque l'extension 1 se trouve en position déployée.

En position rabattue de l'extension latérale 1, les tiges préférentiellement rectilignes 5 se trouvent juxtaposées les unes à côté des autres de manière à occuper le moins de place possible. On peut les rendre jointives dans cette position par un mouvement composé obtenu par des moyens, structures ou formes techniques complémentaires.

Les tiges préférentiellement rectilignes 5 sont prévues suffisamment longues et nombreuses, et suffisamment rapprochées les unes des autres, selon un faible espacement par exemple d'une épaisseur de tige, pour former en position déployée une zone de support plane et résistante c'est-à-dire non facilement déformable pour constituer un plan support 14 de bonne résistance et stabilité sur lequel l'opérateur peut marcher confortablement et en toute sécurité et sur lequel peut reposer une charge ou une partie de celle-ci.

Une structure de protection pour la protection anti-chute de l'opérateur et plus généralement du piéton, notamment un garde-corps 15, peut avantageusement être prévue sur le bord extérieur de l'extension latérale 1, de préférence sur l'élément longitudinal rigide de liaison 10, afin d'améliorer encore la sécurité de l'opérateur.

En position rabattue de l'extension latérale, l'élément longitudinal rigide de liaison 10 portant le garde-corps 15 vient se placer à proximité du longeron annexe fixe 11 et se trouve préférentiellement plaqué contre celle-ci, voire même sur celle-ci. Les tiges préférentiellement rectilignes 5 se retrouvent alors fortement inclinées, très proches les unes des autres pouvant par exemple, être en contact entre elles.

Le passage de la position déployée à la position rabattue de l'extension latérale1 se fait par un mouvement de pivotement d'ensemble à partir des mouvements élémentaires de chacune des tiges préférentiellement rectilignes 5 autour d'un axe vertical passant par leur extrémité intérieure 7 liée au longeron annexe fixe 11 par rapport au plateau de chargement 4. L'élément longitudinal rigide de liaison 10 se déplace longitudinalement et se rapproche du plateau de chargement 4 tout en restant toujours sensiblement parallèle à celui-ci.

Le garde-corps 15 reste en place et opérationnel dans cette position.

Le passage de la position rabattue à la position déployée de l'extension 1 se fait de la même façon par un mouvement de pivotement en sens inverse.

Le passage de l'une à l'autre de ces positions caractéristiques peut se faire manuellement par exemple en tirant ou en poussant l'élément longitudinal rigide de liaison 10 qui peut comporter à cet effet, une ou plusieurs poignées non représentées ou tout autre dispositif manuel de préhension et d'actionnement permettant le passage de l'une à l'autre des positions caractéristiques.

Un système d'actionnement automatisé et motorisé, par exemple à base de vérins, à commande manuelle ou automatique peut également être envisagé. Le fonctionnement peut être télécommandé.

Par ailleurs, un dispositif de blocage (non représenté) et de verrouillage est en outre prévu, afin de garantir le maintien de l'extension latérale 1 dans chacune de ses deux positions caractéristiques, ce dispositif de blocage devant être préalablement déverrouillé pour permettre le passage d'une position caractéristique à l'autre.

Diverses fonctions d'autoverrouillage par vérin ou autre peuvent être utilisées à cet effet.

Pour l'exemple représenté sur les différentes figures, l'extension latérale 1 selon l'invention est fixée au longeron de bordure 12 d'un plateau de chargement supérieur 4 du camion porte-voitures 2 et s'étend le long de ce longeron de bordure 12.

Le longeron de bordure 12 présente classiquement une forme de section en I avec une âme centrale 16, une table inférieure 17 et une table supérieure 18 qui sert de surface plane d'appui 13.

Selon une forme de réalisation, le longeron de bordure 12 peut être un rail ou un profilé de fixation 19 (représenté seul sur les figures 12 et 13) qui permet de fixer l'extension latérale 1 au longeron de bordure 12 et par cet intermédiaire au plan de chargement 4 attenant.

Le rail de fixation 19 est une structure métallique longitudinale creuse préférentiellement mécanosoudée. Ce rail de fixation 19 est rapporté contre le côté intérieur du longeron de bordure 12 du plan de chargement et fixé sur celui-ci préférentiellement par vissage par exemple au moyen de pattes de vissage 20 ou solidarisé à celui-ci.

Le rail de fixation 19 est fixé en appui de calage par sa paroi supérieure 21 contre la sous-face de la table supérieure 18 du longeron de bordure 12 et par sa paroi latérale extérieure 22 contre la face intérieure de l'âme centrale 16 du longeron 12. Il constitue ainsi un support de fixation solide pour l'extension latérale 1 selon l'invention.

Le rail de fixation 19 présente une série de perçages supérieurs 23 dans sa paroi supérieure 21 et de perçages inférieurs 24 dans sa paroi inférieure 25, en regard deux à deux, formant ainsi une série de conduits traversants dans lesquels peuvent être insérées les extrémités intérieures 7 recourbées vers le bas des tiges préférentiellement rectilignes 5.

Une fois engagées dans les perçages 23 et 24 du rail de fixation 19 formant des conduits traversants, les extrémités intérieures 7 recourbées vers le bas des tiges préférentiellement rectilignes 5 sont retenues en position par tout moyen permettant leur libre pivotement, notamment par tout moyen d'immobilisation en translation transversale par rapport au rail de fixation 19 formant l'équivalent d'un palier, par exemple comme représenté, au moyen de rondelles et d'écrous tels que 26 en prise avec leur filetage 9 d'extrémité.

L'élément longitudinal rigide de liaison 10 est par exemple un tube creux de section carrée, de préférence fermée. Il comporte également une série de perçages supérieurs 27 ménagés dans sa paroi supérieure 28 et une série de perçages inférieurs ménagés dans sa paroi inférieure 29, en regard deux à deux, de manière à former ainsi une série de conduits traversants dans lesquels peuvent être engagées les extrémités extérieures 8 recourbées vers le haut des tiges préférentiellement rectilignes 5.

Comme précédemment, les extrémités extérieures 8 recourbées vers le haut des tiges préférentiellement rectilignes 5 données à titre d'exemple, sont retenues en position, une fois engagées dans les perçages supérieurs 27 et inférieurs formant conduits traversants de l'élément longitudinal rigide de liaison et de bordure 10, par tout moyen d'immobilisation en translation par rapport à cet élément longitudinal 10 formant l'équivalent d'un palier mais permettant leur libre pivotement, par exemple comme représenté au moyen de rondelles et d'écrous tels que 26 en prise avec leur filetage 9 d'extrémité.

Selon une variante préférentielle représentée sur la figure 11, l'élément longitudinal rigide de liaison et de bordure 10 peut comporter en outre des embases 30, par exemple cylindriques, s'élevant de sa paroi supérieure 28 et dans lesquelles on peut monter des poteaux 31 par exemple également cylindriques.

Ces poteaux 31 permettent avantageusement de réaliser un garde-corps 15 en bordure extérieure de l'extension latérale 1 selon l'invention afin d'améliorer encore la sécurité de l'opérateur. Pour cela, des câbles ou filins 32 peuvent être accrochés et tendus entre ces poteaux 31, par exemple à l'aide des ouvertures traversantes 33 ménagées dans les poteaux 31.

Pour former l'extension latérale 1 selon l'invention, les tiges préférentiellement rectilignes 5 sont placées en appui par une partie de leur longueur sur le longeron de bordure 12. Chaque extrémité intérieure 7 recourbée vers le bas est engagée dans un couple de perçages supérieur 23 et inférieur 24 du rail de fixation 19 et y est retenue en position comme décrit précédemment par exemple au moyen d'un écrou 26.

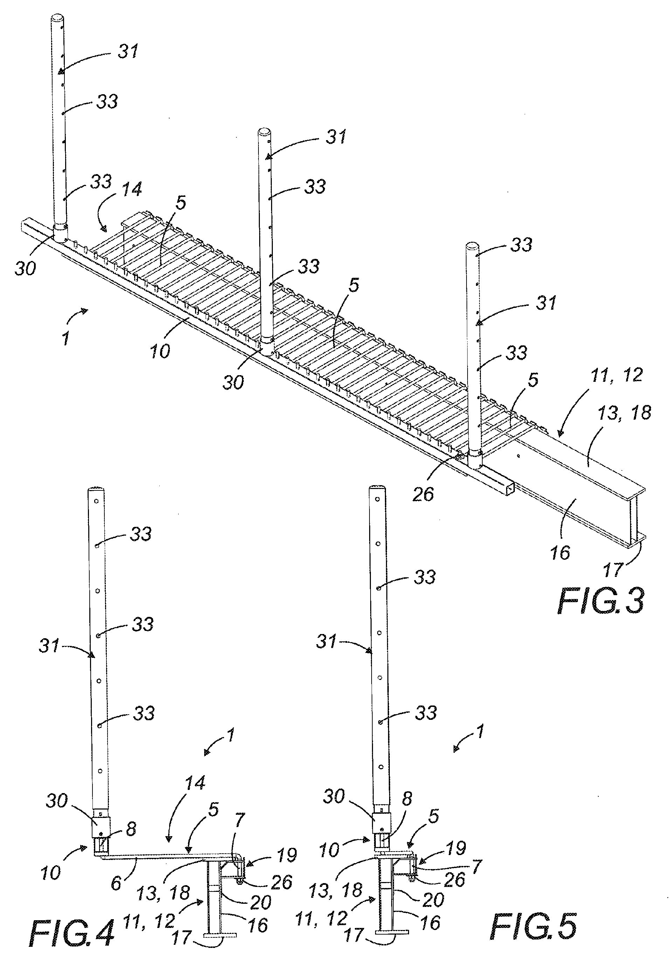

Comme illustré sur les figures 3, 4 et 7, en position déployée de l'extension 1, les tiges 5 reposent en appui contre la table supérieure d'appui 18 du longeron de bordure 12 sur une partie de leur longueur et s'étendent en porte-à-faux vers l'extérieur par le reste de leur longueur.

Comme les tiges 5 portent par une partie de leur longueur sur la face supérieure du longeron, l'extension 1 ainsi obtenue est très résistante et peut, malgré le porte-à-faux, supporter un poids relativement important, par exemple une charge ou une partie de celle-ci largement supérieur à celui d'une personne se tenant ou marchant sur le support en saillie constitué par l'extension latérale 1.

L'extrémité extérieure 8 recourbée vers le haut de chacune des tiges 5 est engagée dans un couple de perçages supérieur 27 et inférieur de l'élément longitudinal rigide de liaison 10 et y est retenue en position comme décrit précédemment par exemple au moyen d'un écrou 26.

L'élément longitudinal rigide de liaison 10 permet de relier les tiges préférentiellement rectilignes 5 les unes aux autres et assure ainsi un pivotement coordonné et simultané des différentes tiges préférentiellement rectilignes 5 dans un mouvement unitaire d'ensemble pour passer d'une position caractéristique à l'autre. Il confère également une grande rigidité à l'extension latérale.

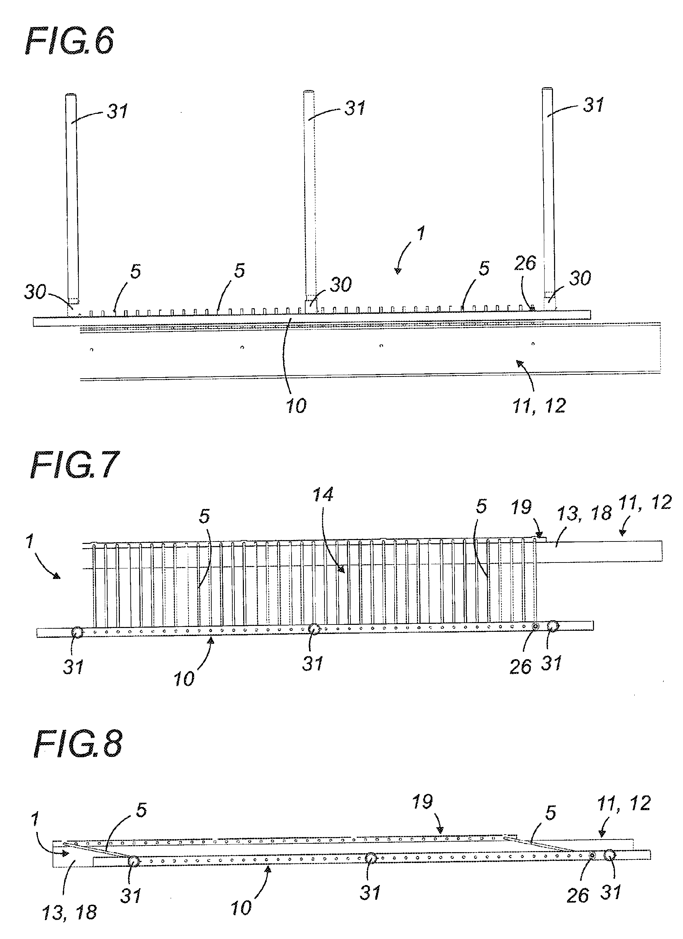

Pour passer en position rabattue, les tiges préférentiellement rectilignes 5 pivotent simultanément dans un plan horizontal, chacune autour d'un axe de pivotement vertical passant par leur extrémité intérieure 7 recourbée vers le bas, et se retrouvent en position inclinée entièrement ou quasiment entièrement, supportées par la table supérieure d'appui 18 du longeron de bordure 12 comme représenté sur les figures 5 et 8.

Pendant ce déplacement, l'élément longitudinal rigide de liaison 10 reste sensiblement parallèle au longeron de bordure 12 et vient de préférence lui aussi reposer sur la table supérieure 18 du longeron de bordure 12 (figure 8).

De cette façon, en position rabattue, l'extension latérale 1 est entièrement escamotée et ne dépasse pas latéralement. La largeur du véhicule n'augmente pas du fait de la présence de l'extension latérale 1.

Pour faciliter l'accès à la structure déployable selon l'invention, on peut prévoir une échelle, un escalier ou un marchepied, ou tout autre moyen d'accès fixe, escamotable ou rétractable.

Le garde-corps porté par l'élément longitudinal rigide de liaison et de bordure 10 reste dans un état opérant de sécurité pour la protection de l'opérateur dans toutes les positions de la structure latérale déployable selon l'invention.

Il est clair que, pour des raisons réglementaires, la largeur du véhicule en position rabattue de l'extension latérale doit s'inscrire dans le gabarit routier ou ferroviaire.

De manière évidente, l'invention ne se limite pas au mode de réalisation préférentiel décrit précédemment et représenté sur les différentes figures, l'homme du métier pouvant y apporter de nombreuses modifications et imaginer d'autres variantes sans sortir ni de la portée, ni du cadre de l'invention définis par les revendications.

## Revendications

1. Extension latérale porteuse destinée à être montée le long d'au moins un côté longitudinal d'un plan porteur d'un chargement d'un véhicule dans le domaine des transports routiers et ferroviaires pour servir de surface porteuse ou de circulation à un opérateur **caractérisée en ce qu'**elle se compose :
. d'un longeron de bordure (12) solidarisé ou fixé le long du au moins un plan de chargement
. d'un élément longitudinal rigide de liaison (10) formant la limite extérieure de l'extension latérale porteuse,
. d'une multitude de supports préférentiellement rectilignes individuels de support (5) rabattables par pivotement autour d'un axe vertical les uns vers les autres reliant le longeron de bordure (12) à l'élément longitudinal rigide de liaison qui sont :
. articulés chacun à pivotement par l'une de leurs extrémités au longeron de bordure (12) autour d'un axe vertical,
. supportés à cette extrémité sur une fraction de leur longueur par un longeron de plan de chargement,
. articulés à pivotement par l'autre de leurs extrémités à l'élément longitudinal rigide de liaison (10),
et supportant au niveau de cette autre extrémité l'élément longitudinal rigide de liaison (10) en porte-à-faux latéral par rapport au plan de chargement, les supports (5) formant une extension latérale servant de support et de voie de passage et de circulation.

2. Extension latérale selon la revendication 1 **caractérisée en ce que** les supports préférentiellement rectilignes individuels de support (5) rabattables sont des tiges, des barrettes ou des lames parallèles, des fils ou des câbles tendus sensiblement parallèles et libres individuellement en pivotement tout en réalisant un pivotement d'ensemble.

3. Extension latérale selon la revendication 1 ou 2 **caractérisé en ce que** les éléments préférentiellement rectilignes de support (5) sont distants d'au moins une de leur épaisseur en position étendue et jointifs en position rabattue.

4. Extension latérale selon l'une quelconque des revendications précédentes **caractérisée en ce que** le longeron de bordure (12) est un longeron attenant du plateau de chargement

5. Extension latérale selon l'une quelconque des revendications précédentes **caractérisée en ce qu'**elle est associée à un garde-corps (15) supporté par l'élément longitudinal de liaison (10).

6. Extension latérale selon la revendication 1 **caractérisée en ce**
**qu'**elle comporte une multitude de tiges préférentiellement rectilignes (5), juxtaposées les unes à côtés des autres et parallèlement les unes aux autres, et qui en position déployée de la extension latérale (1) s'étendent sensiblement transversalement par rapport à la direction générale de la extension latérale (1) et se trouvent suffisamment rapprochée pour former le plan support (14) de la extension latérale (1) ; chacune de ces tiges préférentiellement rectilignes (5) comprenant une portion centrale (6), une extrémité intérieure (7) destinée à être reliée au véhicule (2) et une extrémité extérieure (8) située du côté opposé et destinée à être disposée vers l'extérieur ;
**qu'**elle comprend un élément longitudinal rigide de liaison et de bordure (10), servant de bordure longitudinale extérieure à la extension latérale (1) et reliant les tiges préférentiellement rectilignes (5) entre elles ;
en ce que les tiges préférentiellement rectilignes (5) sont montées à libre pivotement par chacune de leurs extrémités (7, 8), d'une part pour leurs extrémités intérieures (7) sur une structure longitudinale fixe (11) par rapport au plateau de chargement (4) et d'autre part pour leurs extrémités extérieures (8) sur l'élément longitudinal rigide de liaison (10) ;
et en ce qu'en position déployée de la extension latérale (1), les tiges préférentiellement rectilignes (5) portent par une partie de leur portion centrale (6) sur une surface plane d'appui (13) adjacente fixe par rapport au plateau de chargement (14) et se trouvent en porte-à-faux vers l'extérieur sur le restant de leur portion centrale (6) tout en présentant une résistance mécanique suffisante pour soutenir en toute sécurité au moins un piéton statique ou en mouvement.

7. Extension latérale selon l'une quelconque des revendications précédentes **caractérisée en ce que** la structure longitudinale fixe (11) par rapport au plateau de chargement (4) est une structure longitudinale du plateau de chargement (4) ou le longeron de bordure (12) du plateau de chargement (4).

8. Extension latérale selon la revendication précédente **caractérisée en ce qu'**elle comprend un profilé ou rail de fixation (19) sur lequel sont montées à libre pivotement les extrémités intérieures (7) des tiges préférentiellement rectilignes (5), ce profilé ou rail de fixation (19) étant lui-même fixé au longeron de bordure (12) du plateau de chargement (4).

9. Extension latérale selon l'une quelconque des revendications précédentes **caractérisée en ce que** les extrémités intérieures (7) des tiges préférentiellement rectilignes (5) sont recourbées vers le bas et **en ce que** les extrémités extérieures (8) des tiges préférentiellement rectilignes (5) sont recourbées vers le haut.

10. Extension latérale selon l'une quelconque des revendications précédentes **caractérisée en ce que** la surface plane d'appui (13) adjacente fixe par rapport au plateau de chargement (14) sur laquelle portent les tiges préférentiellement rectilignes (5) sur une partie de leur portion centrale (6) est la table supérieure (18) du longeron de bordure (12) du plateau de chargement (4).

11. Extension latérale selon la revendication 2 ou 4 **caractérisée en ce que** les parois supérieure (28, 21) et inférieure (29, 25) du profilé creux servant d'élément longitudinal rigide de liaison (10) ou du rail de fixation (19) présentent des perçages (27, 23, 24) correspondants qui sont traversés respectivement par les extrémités extérieures (8) ou intérieures (7) des tiges préférentiellement rectilignes (5).

12. Extension latérale selon la revendication précédente **caractérisée en ce que** les extrémités extérieures (8) ou intérieures (7) des tiges préférentiellement rectilignes (5) sont immobilisées en translation transversale par rapport au profilé creux servant d'élément longitudinal rigide de liaison (10) ou au rail de fixation (19) par un moyen d'immobilisation en translation formant palier ou par un moyen d'immobilisation à rondelle et écrou (26).

13. Extension latérale selon l'une quelconque des revendications précédentes **caractérisée en ce qu'**elle comporte une structure de protection ou un garde-corps (15) pour la protection anti-chute du piéton, monté sur l'élément longitudinal rigide de liaison et de bordure (10).

14. Extension latérale selon l'une quelconque des revendications précédentes **caractérisée en ce qu'**en position rabattue de l'extension latérale (1), l'élément longitudinal rigide de liaison (10) se trouve sur la structure longitudinale fixe (11) par rapport au plateau de chargement (4).

15. Extension latérale selon l'une quelconque des revendications précédentes **caractérisée en ce que**, pour permettre le passage de l'une à l'autre de ses positions caractéristiques, elle comporte un dispositif manuel de préhension et d'actionnement situé au niveau de l'élément longitudinal rigide de liaison et de bordure (10), ou un système d'actionnement automatisé à commande manuelle ou automatique, commandé ou télécommandé.

16. Extension latérale selon l'une quelconque des revendications précédentes **caractérisée en ce qu'**elle comporte un dispositif de blocage garantissant le maintien de l'extension latérale (1) dans chacune de ses deux positions caractéristiques, ce dispositif de blocage devant être préalablement déverrouillé pour permettre le passage d'une position caractéristique à l'autre.

17. Véhicule porte-voitures (2) comportant au moins un plateau de chargement (4), caractérisé en qu'il est équipé le long d'au moins un des bords longitudinaux de son plateau de chargement (4) d'une extension latérale (1) latérale de support ou de passage piéton selon l'une quelconque des revendications précédentes.

## Patentansprüche

1. Eine tragende seitliche Erweiterung, die an mindestens einer Ladefläche eines im Straßen und Schienentransport eingesetzten Transportfahrzeugs als Tragfläche oder als Brücke für einen Bediener angebracht wird und aus folgenden Elementen besteht:
- einem längs der Ladefläche verbundenen oder befestigten Kantenlängsträger (12)
- einem steifen längsförmigen Verbindungselement (10), das die äußere Kante der tragenden seitlichen Erweiterung bildet,
- zahlreichen vorzugsweise geradlinigen einzelnen um eine vertikale Achse per Schwenkbewegung einklappbaren Trägern (5), die den Kantenlängsträger (12) mit dem steifen längsförmigen Verbindungselement verbinden. Diese:
- sind jeweils an einem ihrer Enden am Kantenlängsträger (12) um eine vertikale Achse herum schwenkbar,
- werden an jedem Ende über einen Teil ihrer Länge von einem Längsträger der Ladefläche gestützt,
- schwenken am jeweiligen anderen Ende am steifen längsförmigen Verbindungselement (10),
- und stützen auf der Ebene dieses anderen Endes das steife längsförmige Verbindungselement (10) seitlich freischwebend zur Ladefläche, wobei die Träger (5) eine seitliche Erweiterung bilden, die als Träger und Gehsteig dienen.

2. Eine seitliche Erweiterung gemäß Anspruch 1, die **dadurch gekennzeichnet ist, dass** die einzelnen vorzugsweise geradlinigen einklappbaren Träger (5) parallele Stäbe, Leisten oder Riemen, möglichst parallele, frei schwenkbare gespannte Drähte oder Drahtseile sind, die einer Gesamtschwenkbewegung folgen.

3. Eine seitliche Erweiterung gemäß den Ansprüchen 1 oder 2, die dadurch **dadurch gekennzeichnet ist, dass** der Mindestabstand der einzelnen vorzugsweise geradlinigen Trägerelemente (5) in entfalteter Position ihrer Dicke entspricht und dass sie in eingeklappter Position aufeinander liegen.

4. Eine seitliche Erweiterung gemäß einem beliebigen der o. a. Ansprüche die, was den Längskantenträger (12) betrifft, **dadurch gekennzeichnet ist, dass** der Kantenlängsträger ein an der Ladefläche angebrachter Längsträger ist.

5. Eine seitliche Erweiterung gemäß einem beliebigen der o. a. Ansprüche, die **dadurch gekennzeichnet ist, dass** sie mit einer Brüstung (15) verbunden ist, die von dem längsförmigen Verbindungselement (10) getragen wird.

6. Eine seitliche Erweiterung gemäß dem Anspruch 1, die **dadurch gekennzeichnet ist, dass** sie über viele vorzugsweise geradlinige nebeneinander und parallel zueinander angeordnete Stäbe (5) verfügt, die sich in der entfalteten Position der seitlichen Erweiterung (1) eindeutig quer zur allgemeinen Richtung der seitlichen Erweiterung (1) erstrecken und hinreichend dicht aneinander liegen, um eine Tragfläche (14) der seitlichen Erweiterung zu bilden; jeder einzelne dieser vorzugsweisen geradlinigen Stäbe (5) verfügt über einen Mittelteil (6), ein inneres Ende (7), das zur Verbindung mit dem Fahrzeug (2) dient, sowie ein äußeres Ende (8), das sich auf der gegenüberliegenden Seite befindet und dazu bestimmt ist, sich nach außen zu richten;
dass sie über ein steifes längsförmiges Verbindungs- und Kantenelement (10) verfügt, das der seitlichen Erweiterung (1) als längsförmige äußere Kante dient und das die vorzugsweise geradlinigen Stäbe (5) miteinander verbindet;
dass, was die vorzugsweise geradlinigen Stäbe (5) betrifft, diese an ihren beiden Enden (7, 8) frei schwenkend montiert werden, wobei einerseits die inneren Enden (7) auf einem in Bezug auf die Ladefläche festen Längsträger (11) oder auf dem Längsträger dieser Ladefläche (4) montiert und andererseits die gegenüberliegende nach außen gerichteten Enden (8) auf das steife Verbindungselement (10) montiert werden;
und dass, was die entfaltete Position der seitlichen Erweiterung (1) betrifft, die vorzugsweise geradlinigen Stäbe (5) mit einem Teil ihres Mittelteils (6) sich auf eine angrenzende ebene und in Bezug auf die Ladefläche (14) feste Auflagefläche (13) erstrecken, wobei die restliche Länge ihres Mittelteils (6) freitragend hervorstehend nach außen gerichtet ist und einen ausreichenden mechanischen Widerstand aufweist, um sicher eine Last bzw. eine statische oder sich zu Fuß fortbewegende Person zu tragen.

7. Eine seitliche Erweiterung gemäß einer der vorangehenden Ansprüche, die **dadurch gekennzeichnet ist, dass** die in Bezug auf die Ladefläche (4) längsförmige Struktur (11) eine längsförmige Struktur der Ladefläche (4) oder der Kantenlängsträger (12) der Ladefläche (4) ist.

8. Eine seitliche Erweiterung, die gemäß dem vorangehenden Anspruch **dadurch gekennzeichnet ist, dass** sie über ein Befestigungsprofil bzw. über eine Befestigungsschiene (19) verfügt, auf der frei schwenkend die inneren Enden (7) der der vorzugsweise geradlinigen Stäbe (5) montiert sind, wobei dieses Befestigungsprofil bzw. diese Befestigungsschiene (19) ihrerseits auf dem Kantenlängsträger (12) der Ladefläche (4) montiert ist.

9. Eine seitliche Erweiterung, die gemäß einer der vorangehenden Ansprüche **dadurch gekennzeichnet ist, dass** die inneren Enden (7) der vorzugsweise geradlinigen Stäbe (5) nach unten gekrümmt und die äußeren Enden (8) der der vorzugsweise geradlinigen Stäbe (5) nach oben gekrümmt sind.

10. Eine seitliche Erweiterung, die gemäß einer der vorangehenden Ansprüche **dadurch gekennzeichnet, dass** die angrenzende ebene und in Bezug auf die Ladefläche (14) feste Stützfläche (13) auf die sich die vorzugsweise geradlinigen Stäbe (5) mit einem Teil ihres Mittelteils (6) erstrecken, die obere Platte (18) des Kantenlängsträgers (12) der Ladefläche (4) ist.

11. Eine seitliche Erweiterung, die gemäß den Ansprüchen 2 und 4 **dadurch gekennzeichnet**, die oberen Wände (28, 21) und unteren Wände (29, 25) des als steifes längsförmiges Verbindungselement (10) dienenden Hohlprofils oder der Befestigungsschiene (19) entsprechende Bohrungen (27, 23, 24) aufweisen, in welche jeweils die äußeren (8) und inneren (7) Enden der vorzugsweise geradlinigen Stäbe (5) eingefügt sind;

12. Eine seitliche Erweiterung, die gemäß dem vorangehenden Anspruch **dadurch gekennzeichnet ist, dass** die die äußeren (8) oder inneren (7) Enden der vorzugsweise geradlinigen Stäbe (5) zur Querachse in Bezug auf das als steifes längsförmiges Verbindungselement (10) dienende Hohlprofil oder die Befestigungsschiene (19) mit einem Lager oder mittels Unterlegscheiben und Muttern (26), blockiert werden.

13. Eine seitliche Erweiterung, die gemäß einer der vorangehenden Ansprüche **dadurch gekennzeichnet ist, dass** sie über eine Sicherheitsstruktur bzw. eine als Personenfallschutz dienende Brüstung (15) verfügt, die an einem steifen längsförmigen Verbindungselement (10) angebracht ist.

14. Eine seitliche Erweiterung, die gemäß einer der vorangehenden Ansprüche **dadurch gekennzeichnet ist, dass** in eingeklappter Position der seitlichen Erweiterung (1) sich das steife längsförmige Verbindungselement (10) auf der in Bezug auf die Ladefläche (4) festen längsförmigen Struktur (11) befindet.

15. Eine seitliche Erweiterung, die gemäß einer der vorangehenden Ansprüche **dadurch gekennzeichnet ist, dass** sie, um eine der beiden Positionen (entfaltet/aufgeklappt) zu erreichen, eine manuelle Griffvorrichtung auf der Ebene des steifen längsförmigen Verbindungs- und Kantenelements (10) bzw. über eine automatische Betätigungsvorrichtung mit manueller Steuerung, oder über eine vollautomatische, direkt- oder ferngesteuerte Betätigungsvorrichtung verfügt.

16. Eine seitliche Erweiterung, die gemäß einer der vorangehenden Ansprüche **dadurch gekennzeichnet ist, dass** sie über eine Arretiervorrichtung verfügt, die gewährleistet, dass die seitliche Verlängerung (1) in beiden Positionen verbleibt, wobei die Arretiervorrichtung jeweils vor dem Entfalten bzw. Einklappen entsichert werden muss.

17. Ein Autotransporter (2) mit mindestens einer Ladefläche (4), der **dadurch gekennzeichnet ist, dass** er mindestens an einer Längsseite seiner Ladefläche (4) mit einer mit einer solchen seitlichen tragenden Erweiterung (1) oder als Durchgang dienenden Brücke gemäß einer der vorangehenden Ansprüche ausgerüstet ist.

## Claims

1. Load-bearing lateral extension intended to be mounted along at least one longitudinal side of a load-bearing surface for loading of a vehicle, in the domain of road and rail transport, to act as a lead-bearing or circulation surface for an operator, **characterized in that** it comprises:
- an edging long beam (12) that is integral with or is secured along the length of at least one load-bearing surface;
- a rigid longitudinal linking element (10) forming the outer limit of the load-bearing lateral extension;
- a multitude of supports - preferably retractable individual rectilinear support components (5) - that retract by pivoting around a vertical axis, one towards the others, connecting the edging long beam (12) to the rigid longitudinal bordering and linking element (10), that are:
• articulated to pivot at one of their extremities towards the edging long beam (12), around a vertical axis;
• supported at this extremity over a fraction of their length by a loading-surface long beam;
• articulated to pivot at the other of their extremities towards the rigid longitudinal linking element (10),
and supporting, at this other extremity, the rigid longitudinal linking element (10) offset laterally in relation to the loading surface, the support components (5) forming a lateral extension acting as a support and as a lane of passage and circulation.

2. Lateral extension according to claim 1, **characterized in that** the preferably-retractable individual rectilinear support components (5) are parallel rods, bars or blades, essentially-parallel tensioned wires or cables, being individually unrestricted in pivoting, while pivoting together.

3. Lateral extension according to claim 1 or 2, **characterized in that** the preferably-rectilinear support components (5) are separated by at least their thickness in the extended and jointed position in the retracted position.

4. Lateral extension according to any one of the preceding claims, **characterized in that** the edging long beam (12) is adjacent to the loading platform.

5. Lateral extension according to any one of the preceding claims, **characterized in that** it is associated with a railing (15) supported by the longitudinal linking element (10).

6. Lateral extension according to claim 1, **characterized**
**in that** it comprises a multitude of preferably-rectilinear rods (5) adjacent and parallel to each other, and which, in the deployed position of the lateral extension (1), extend essentially transversally in relation to the general direction of the lateral extension (1), and are sufficiently close to each other to form the support surface (14) of the lateral extension (1); each of these preferably-rectilinear rods (5) having a central portion (6), an interior extremity (7) intended to be connected to the vehicle (2), and an exterior extremity (8) located on the opposing side, and intended to be positioned towards the exterior;
**in that** it comprises a rigid longitudinal bordering and linking element (10) serving as exterior longitudinal edge to the lateral extension (1), interconnecting the preferably-rectilinear rods (5);
**in that** the preferably-rectilinear rods (5) are mounted so as to pivot freely at each of their interior extremities (7, 8), firstly, as regards their interior extremities (7), on a longitudinal structure (11) that is fixed in relation to the loading platform (4), and, secondly, as regards their exterior extremities, on the rigid longitudinal linking element (10);
and **in that**, in the deployed position of the lateral extension (1), the preferably-rectilinear rods (5) bear - via a part of their central portion (6) - on an adjacent planar bearing surface (13) that is fixed in relation to the loading platform (14), and that are offset towards the exterior on the remainder of their central portion (6), while having sufficient mechanical strength to safely support at least one pedestrian, either standing still or in movement.

7. Lateral extension according to any one of the preceding claims, **characterized in that** the longitudinal structure (11) - which is fixed in relation to the loading platform (4) - is a longitudinal structure of the loading platform (4) or the edging long beam (12) of the loading platform (4).

8. Lateral extension according to the preceding claim, **characterized in that** in comprises a section bar or securing rail (19), on which the interior extremities of the preferably-rectilinear rods (5) are mounting freely-pivoting, with this section bar or securing rail (19) being itself secured to the loading platform's (4) edging long beam (12).

9. Lateral extension according to any one of the preceding claims, **characterized in that** the interior extremities (7) of the preferably-rectilinear rods (5) are curved downwards, and by the fact that the exterior extremities (8) of the preferably-rectilinear rods (5) are curved upwards.

10. Lateral extension according to any one of the preceding claims, **characterized in that** the adjacent planar bearing surface (13) - which is fixed in relation to the loading platform (14) - on which a part of the central portion (6) of the preferably-rectilinear rods (5) bear, is the upper table (18) of the loading platform's (4) edging long beam (12).

11. Lateral extension according to claim 2 or 4, **characterized in that** the upper walls (28, 21) and lower walls (29, 25) of the hollow section bar serving as a rigid longitudinal linking element (10) or securing rail (19) have corresponding drillings (27, 23, 24) through which the exterior extremities (8) or interior extremities (7) of the preferably-rectilinear rods (5) pass.

12. Lateral extension according to the preceding claim, **characterized in that** the exterior extremities (8) or interior extremities (7) of the preferably-rectilinear rods (5) are immobilized in sideways movement in relation to the hollow section bar serving as a rigid longitudinal linking element (10) or in relation to the securing rail (19), by a system of immobilization of sideways movement forming a bearing, or by an immobilization system with washer and nut (26).

13. Lateral extension according to any one of the preceding claims, **characterized in that** it comprises a protective structure or a railing (15) to prevent pedestrians from falling, mounted on the rigid longitudinal bordering and linking element (10).

14. Lateral extension according to any one of the preceding claims, **characterized in that**, in the retracted position of the lateral extension (1), the rigid longitudinal linking element (10) is on the longitudinal structure (11), which is fixed in relation to the loading platform (4).

15. Lateral extension according to any one of the preceding claims, **characterized in that**, to allow passage from one to the other of its characteristic positions, it comprises a manually-operated gripping and actuation system at the rigid longitudinal bordering and linking element (10) or an automated actuation system with manual or automatic control, controlled or remote-controlled.

16. Lateral extension according to any one of the preceding claims, **characterized in that** it comprises a blocking system ensuring the maintenance of the lateral extension (1) in one of its two characteristic positions, with this blocking system first requiring to be unlocked before allowing passage from one characteristic position to the other.

17. Car-carrying vehicle (2) incorporating at least one loading platform (4), **characterized in that** it is equipped, along one of the longitudinal edges of its loading platform (4), with a lateral extension (1) for support or pedestrian passage, according to any one of the preceding claims.
